# FASCICULE DE BREVET EUROPEEN

(11) **EP 1 185 425 B1**
(45) Date de publication et mention de la délivrance du brevet: **02.05.2003**
(21) Numéro de dépôt: 00922667.1
(22) Date de dépôt: 27.04.2000
(51) Int. Cl.: B60B 25/10, B60C 15/02, B60B 25/14

(54) **ENSEMBLE DE MONTAGE D'UN PNEUMATIQUE SUR UN MOYEU**
MONTAGEANORDNUNG EINES REIFENS AUF EINE NABE
KIT FOR MOUNTING A WHEEL ON A HUB

(30) Priorité: 25.05.1999 FR 9906613
(43) Date de publication de la demande: 13.03.2002
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: DURIF, Pierre, F-63530 Enval (FR)
(74) Mandataire: Diernaz, Christian
(86) Numéro de dépôt international: EP0003827
(87) Numéro de publication internationale: WO00071365

(56) Documents cités:
- FR-A- 2 087 770
- FR-A- 2 677 304
- US-A- 4 706 723
- US-A- 5 259 430
- US-A- 5 890 526

## Description

L'invention concerne une jante ou ensemble d'éléments constituant une jante pour le montage et le roulage d'un pneumatique sans chambre à air indépendante ou "tubeless", et destiné plus particulièrement à l'équipement des véhicules lourds.

Si nous considérons les jantes des ensembles roulants couramment utilisés, nous pouvons distinguer principalement des jantes dites à base creuse, possédant des sièges tronconiques inclinés par rapport à l'axe de rotation de l'ensemble d'un angle de 5° ou de 15°, et des jantes à fond plat ou pratiquement plat ayant des sièges inclinés soit à 0°, soit à 5° par rapport à l'axe de rotation.

Les jantes dites à base creuse comportent une gorge de montage dont le diamètre est nettement inférieur au diamètre nominal de la jante. Ce diamètre intérieur de la jante est considéré par les utilisateurs comme trop petit, car il ne permet pas de choisir par exemple des tambours de freins de dimensions adaptées à un freinage efficace des véhicules de plus en plus puissants par rapport à leurs poids.

De ce fait, lesdites jantes sont couramment employées pour les montage et roulage par exemple des pneumatiques de Tourisme et/ou Poids-Lourds, mais le sont beaucoup moins et parfois pas du tout pour les autres types de véhicules, tels que, par exemple, les engins de chantier et Génie Civil.

Pour le montage du pneumatique dit "tubeless", une jante à fond plat nécessite la présence d'au moins un anneau latéral amovible, d'un anneau de verrouillage et d'un joint d'étanchéité, et évidemment du fond de jante muni d'un rebord fixe du côté opposé au côté où les pièces sont amovibles. Il faut donc au minimum trois pièces. Dans la majorité des cas, le nombre de pièces nécessaires est supérieur à trois et peut atteindre parfois six pièces pour les grosses dimensions de pneumatique. Exception faite des joints d'étanchéité en caoutchouc, les pièces d'une jante sont métalliques, et en conséquence lourdes, encombrantes, et difficiles à manutentionner. Il s'ensuit que les montage et démontage de pneumatiques de grande et très grande dimension constituent des opérations difficiles et longues. La mise en place et/ou l'enlèvement d'une roue équipée d'un tel pneumatique requièrent l'immobilisation du véhicule ou de l'engin pendant une durée non négligeable. En outre, les pièces métalliques utilisées que sont les anneaux coniques, les rebords, les anneaux de verrouillage, sont souvent sujettes à des usures partielles, localisées, avec ou sans oxydation et formation de rouilles, avaries qui entraînent lors d'utilisation ultérieure des montages défectueux avec pertes de pression mais aussi création de concentration de contraintes pouvant entraîner des ruptures de pièces. Par ailleurs les joints d'étanchéité en caoutchouc vulcanisé demandent, comme connu en soi, beaucoup de soins dans leur placement ; en outre ils sont sujets à l'oxydation naturelle et de mauvaises conditions de stockage, d'où apparition de nombreuses craquelures ; ainsi, et dans de nombreux cas les conditions sont telles que lesdits joints ne remplissent pas de manière satisfaisante le rôle auquel ils étaient destinés.

Afin de remédier aux inconvénients ci-dessus, d'utiliser le nombre de pièces le moins grand possible et d'assurer dans le temps une meilleure liaison de l'ensemble roulant à la roue ; l'invention propose un nouvel ensemble de montage d'un pneumatique sans chambre à air indépendante, comprenant au moins deux anneaux coniques métalliques destinés à recevoir les bourrelets de pneumatique, lesdits deux anneaux métalliques étant positionnés et verrouillés sur le moyeu du véhicule au moyen de deux anneaux de verrouillage latéraux, circulaires, chacun étant composé d'un mélange de caoutchouc vulcanisé renforcé par et enrobant un anneau de renforcement circonférentiellement élastique et radialement résistant à la compression, et étant placé dans un évidement du moyeu.

Il faut entendre par anneau de renforcement circonférentiellement élastique un élément dont le développement circonférentiel est susceptible de s'allonger d'au moins 3 % sous un effort d'au plus 50 daN, et revenant à son état initial lorsque l'effort est supprimé.

Il faut entendre par anneau de renforcement radialement résistant à la compression un anneau dont la dimension radiale maximale de sa section transversale, c'est-à-dire la plus grande distance radiale entre deux points du contour de ladite section situés sur une perpendiculaire à l'axe de rotation de la jante, est diminuée sous effort d'au plus 2 %.

Par anneau conique de montage, il faut entendre un anneau ayant radialement à l'extérieur un siège dont la génératrice fait avec la direction de l'axe de rotation un certain angle, mais aussi un anneau dont le siège a une génératrice faisant avec ledit axe une angle nul.

Il faut entendre par mélange de caoutchouc vulcanisé ou vulcanisat un mélange d'élastomère(s), de charges renforçantes et d'additifs bien connus que l'on vulcanise à une certaine température. Préférentiellement, le mélange d'enrobage de l'anneau de renforcement aura un module sécant d'élasticité sous un allongement relatif de 10 % d'au moins 6 MPa.

US 5 259 430 décrit un ensemble de montage d'un pneumatique selon le préambule de la revendication 1. FR 2 087 770, US 4 706 723 et US 5 890 526 décrivent d'autres ensembles de montage pour pneumatiques sans chambre à air indépendante.

Un anneau circulaire de caoutchouc renforcé par un anneau de renforcement circulaire, ledit anneau étant circonférentiellement élastique et radialement résistant à la compression, est décrit dans le brevet FR 2 677 304. Ledit anneau de caoutchouc est dans le brevet cité utilisé comme adaptateur, c'est-à-dire un moyen ayant une section méridienne adaptée de manière à pouvoir monter des bourrelets de pneumatique ayant une configuration donnée sur des jantes destinées à recevoir des bourrelets d'une autre configuration. L'anneau ainsi utilisé est un anneau de montage de bourrelets avec, en particulier, une paroi radialement extérieure de profil méridien identique aux profils normalisés, lorsqu'il s'agit de monter un pneumatique répondant aux normes en vigueur. L'invention utilise un tel anneau de caoutchouc renforcé sous une forme adaptée, non pas comme adaptateur ou anneau de montage, mais comme anneau de verrouillage, les anneaux de montage étant, dans le cadre de l'invention, métalliques et non caoutchouteux.

Un anneau de verrouillage conforme à l'invention est décrit dans la revendication 1. Il est considéré comme ayant au moins deux parois : une paroi radialement intérieure et une paroi radialement extérieure, lesdites deux parois pouvant être réunies par des parois latérales quasi-perpendiculaires à la direction de l'axe de rotation. La paroi radialement intérieure a une forme qui est semblable à la forme ou profil des évidements ou gorges créés sur le moyeu de l'engin pour recevoir lesdits anneaux. Lesdits évidements peuvent avoir, vus en section méridienne, une forme quelconque mais ont préférentiellement une section méridienne dont la surface est quasi-triangulaire avec une base sur la génératrice du moyeu et avec deux côtés formant avec la direction parallèle à l'axe de rotation des angles aigus pouvant être compris entre 10° et 45°, les deux côtés étant réunis à l'opposé de ladite base par un sommet arrondi, pour minimiser les concentrations de contraintes et le risque de fissurations par fatigue. La quasi-hauteur dudit triangle, abaissée du sommet arrondi sur ladite base est préférentiellement comprise entre 10 et 45 mm. La paroi radialement intérieure de l'anneau de verrouillage a, en section méridienne, un profil identique au profil intérieur du quasi-triangle ci-dessus.

La section méridienne de l'anneau de renforcement de l'anneau de verrouillage, dans sa partie radialement intérieure, peut être de forme quelconque dans la mesure où une partie importante de la dimension radiale maximale de sa section méridienne est comprise dans la section triangulaire de l'évidement aménagé dans le moyeu. Il faut entendre par partie importante une distance radiale au moins égale à 25 % de la dimension radiale maximale de section d'anneau de renforcement. Ladite partie radialement intérieure de l'anneau de renforcement peut avoir deux formes préférentielles : elliptique (le cercle étant considéré comme une ellipse) et polygonale avec au moins deux côtés sensiblement parallèles aux deux côtés de la section triangulaire de l'évidement du moyeu, ce qui permet le positionnement correct de l'anneau de verrouillage élastique et de conserver ledit positionnement malgré les efforts ou contraintes prenant naissance avec le gonflage, et l'écrasement, et le roulage du pneumatique.

Quant à la section méridienne dans la partie radialement extérieure de l'anneau de verrouillage, elle peut être aussi de forme elliptique, mais sera préférentiellement composée d'au moins d'une partie tronconique dont la génératrice fait avec la direction de l'axe de rotation un angle pouvant être compris entre 15° et 35°. Ladite partie tronconique viendra lors du montage du pneumatique en regard de la partie tronconique de la paroi radialement intérieure de l'anneau conique sur lequel sera monté le bourrelet du pneumatique. La section méridienne de l'anneau de renforcement, dans sa partie radialement extérieure, peut alors être elliptique, circulaire ou polygonale avec, dans ce dernier cas, un côté parallèle à la partie tronconique de la paroi radialement extérieure de l'anneau.

Quelle que soit la forme de la section méridienne de l'anneau de renforcement, ce dernier est avantageusement un ressort annulaire à spires métalliques jointives. Une spire individuelle peut avoir une section transversale quelconque, mais elle est de préférence circulaire et le diamètre de la section transversale de la spire est, en fonction des dimensions du ressort, comprise entre 2 et 8 mm, ce qui permet une déformation de la spire sous effort de compression, inférieure à 2 %. L'anneau de renforcement peut être aussi une succession d'éléments cylindriques en matière rigide, telle que l'acier, ou la matière céramique, lesdits éléments étant de longueur inférieure au diamètre du cylindre et réunis circonférentiellement entre eux par un mélange de caoutchouc à haute dureté Shore A.

Dans le cas de l'utilisation d'un ressort, la résistance à la compression dudit ressort peut être avantageusement améliorée par l'insertion à l'intérieur des spires, soit d'un élément continu et circulaire en caoutchouc vulcanisé de forte dureté Shore A, soit d'un élément continu et circulaire en matière plastique, lesdits éléments étant circulairement discontinus pour conserver l'élasticité du ressort.

Ledit ressort, en vue de faciliter les opérations de démontage du pneumatique et d'enlèvement de l'anneau de verrouillage, est muni d'un cordon ou sangle métallique permettant au moyen d'un effort de traction exercée sur ledit cordon de déloger l'anneau de l'évidement du moyeu.

L'anneau métallique de montage est un élément métallique composé d'un siège de jante, généralement tronconique mais pouvant être cylindrique, ou autre, ledit siège étant prolongé axialement et radialement à l'extérieur par un rebord de jante, ledit rebord pouvant être éventuellement indépendant du siège et être amovible par rapport audit siège. Ledit anneau a une paroi radialement intérieure formée d'au moins une partie tronconique dont la génératrice fait avec la direction de l'axe de rotation un angle compris entre 15° et 35°, alors que la paroi radialement extérieure, vue en section méridienne, est composée d'une part d'une génératrice tronconique faisant avec la direction de l'axe de rotation un angle pouvant être compris entre 0° et 16°, et d'autre part, prolongeant axialement à l'extérieur ladite génératrice par l'intermédiaire d'un arc de cercle, de la courbe représentative du profil axialement intérieur et radialement extérieur du rebord de jante. Ladite courbe est dans tous les cas avantageusement située radialement à l'extérieur et axialement à l'intérieur d'un segment de droite joignant le point d'intersection de ladite courbe avec la génératrice tronconique ci-dessus et le point de ladite courbe le plus éloigné de l'axe de rotation. Ainsi ladite courbe peut être formée d'un arc de cercle tangent à l'arc de cercle de liaison entre la génératrice tronconique et la courbe. Elle peut aussi être formée d'un segment de droite perpendiculaire ou non à l'axe de rotation, tangent radialement à l'intérieur à l'arc de liaison ci-dessus et radialement à l'extérieur à un deuxième arc de cercle de manière à obtenir la courbe désirée. Les anneaux métalliques de montage peuvent être indépendants du pneumatique et plus particulièrement des bourrelets dudit pneumatique. De manière à faciliter et à accélérer les opérations de montage et de démontage, ainsi que les diverses manutentions, les anneaux coniques avec sièges et rebords font partie intégrante du pneumatique au même titre, par exemple, que les tringles ; lesdits anneaux peuvent être rendus solidaires des bourrelets du pneumatique par un emmanchement à la presse sans possibilité de détachement. Un tel principe est décrit dans le brevet FR 2 087 770 de la demanderesse.

Solidaires on non des bourrelets du pneumatique, et en vue de permettre une manutention plus aisée des éléments à mettre en place, les anneaux métalliques de montage bourrelets sont avantageusement munis dans leurs parties axialement intérieures d'un système à coussin d'air, qui permet d'avoir et de conserver pendant les opérations de montage un espace libre entre moyeu et partie radialement intérieure des anneaux, d'où un déplacement axial grandement amélioré. Ledit espace libre de 5 à 20 mm a aussi pour but de permettre l'engagement à vue sur le moyeu sans coincement de l'ensemble pneumatique-anneaux métalliques.

L'invention sera mieux décrite et mieux comprise à l'aide de la description de modes de réalisation non limitatifs et illustrés par le dessin annexé sur lequel :
- la figure 1 représente schématiquement en section méridienne une première variante conforme à l'invention,
- la figure 2 représente de la même manière une deuxième variante conforme à l'invention, alors que
- la figure 3 représente une troisième variante.

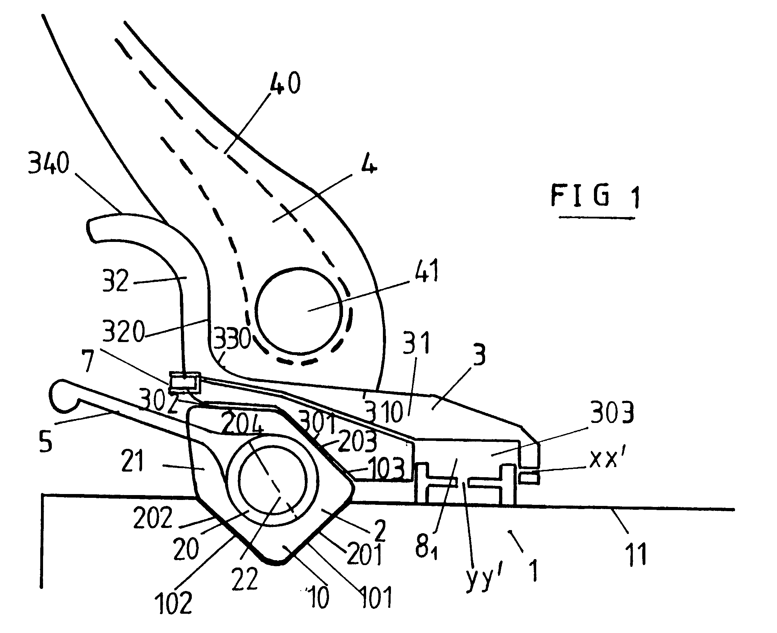

Sur la figure 1 n'est montré que le bourrelet (4) d'un pneumatique de grande dimension et destiné à rouler sur un engin de Génie Civil. Ledit bourrelet est principalement renforcé par une tringle (41) autour de laquelle vient s'ancrer par enroulement l'armature de carcasse radiale (40) dudit pneumatique. Le bourrelet (4) a des parois radialement intérieure et axialement extérieure de forme et dimensions prévues pour être monté sur un anneau métallique de montage (3), composé d'un siège tronconique (31) dont la génératrice (310), vue en section méridienne fait avec la direction de l'axe de rotation un angle de 5° ± 1°, génératrice axialement prolongée à l'extérieur par un arc de cercle (330) reliant ladite génératrice (310) à la paroi (320) d'un rebord de jante (32), ladite paroi (320) étant perpendiculaire à la direction de l'axe de rotation et se terminant axialement et radialement à l'extérieur par un arrondi (340). Les dimensions des génératrices (310) à (340) sont de dimensions normalisées. Quant à la paroi radialement intérieure de l'anneau conique de montage (3), elle est formée principalement d'un évidemment (303), prolongé axialement à l'extérieur par une partie tronconique (301) dont la génératrice fait avec la direction de l'axe de rotation un angle α, ouvert axialement et radialement vers l'intérieur et égal à 30°, elle-même prolongée par une génératrice (302), cylindrique dans l'exemple décrit, et la trace de la paroi axialement extérieure du rebord (32). L'ensemble des génératrices (301) et (302) sont en contact avec la paroi radialement extérieure de l'anneau de verrouillage amovible (2), ladite paroi étant aussi formée, vue en section méridienne, par deux génératrices (203) et (204) présentant les mêmes caractéristiques que les génératrices (301) et (302) respectivement. Ledit anneau (2) de verrouillage est composé d'un mélange de caoutchouc vulcanisé (21) renforcé par un anneau de renforcement qui est un ressort (20) de section circulaire et obtenu par enroulement hélicoïdal de manière jointive d'une spire métallique en acier laitonné de diamètre égal à 4 mm. Afin de donner plus de cohésion à l'anneau de verrouillage (2) et d'éviter les décollages entre les spires du ressort et d'augmenter la résistance à la déformation par compression transversale du ressort, l'enroulement hélicoïdal se fait autour d'un élément continu et circulaire (22) de mélange caoutchouteux vulcanisé à haute dureté Shore A, égale à 93. La face radialement intérieure de l'anneau de verrouillage (2) en caoutchouc renforcé est formé des deux génératrices tronconiques (201) et (202) qui viendront prendre contact et s'appuyer sur les deux génératrices tronconiques (101) et (102) respectivement de l'évidement circulaire (10) créé dans le moyeu (1). Lesdites génératrices forment avec le prolongement de la génératrice cylindrique (11) du moyeu (1) un quasi-triangle isocèle avec deux côtés (101) et (102) faisant avec la direction de l'axe de rotation ou de la génératrice (11) qui lui est parallèle un angle β sensiblement égal à 35° et une base de largeur axiale suffisante pour qu'au moins le tiers du diamètre D du ressort (20), qui est la dimension radiale maximale de l'anneau de renforcement (20) soit situé à l'intérieur du quasi-triangle défini ci-dessus, ce qui permet en combinaison avec la forme de l'évidement et les formes radialement intérieure et extérieure de l'anneau (2), le blocage axial nécessaire et suffisant pour le maintien dudit anneau (2) dans toutes les conditions de roulage. Une sangle (5) est enroulée autour de la section méridienne de l'anneau de renforcement (20) de l'anneau (2) de verrouillage pour permettre, après dégonflage du pneumatique et déplacement du bourrelet axialement vers l'intérieur, le délogement dudit anneau (2) de son logement qu'est l'évidement (10) du moyeu (1).

L'évidement (303) dans la partie axialement intérieure de l'anneau (3) de montage métallique permet de loger un système de positionnement et de centrage de l'ensemble de montage (2, 3) sur la moyeu (1). Ledit système est composé d'une chambre (8) ou d'une succession de chambres couvrant une portion de la surface circonférentielle de l'anneau de montage comprise entre 30 et 80 % de la surface totale. Lesdites chambres contiennent chacune un joint élastomère et sont alimentées en gaz par un réseau spécifique (7) ou par le circuit de gonflage du pneumatique, les joints étant repoussés en fond de chambres, obturant ainsi les ouvertures xx' qui peuvent être communiquants vers l'extérieur ou vers l'intérieur ; une partie du débit s'écoule par les ouvertures yy' et par fuite entre les lèvres du joint et le moyeu assure un effet coussin d'air. La montée en pression dans la chambre haute (8₁) repousse le joint et rétablit la concentricité du siège. Ledit état de concentricité et de suppression des frottements permet dans un premier temps de mettre en place l'anneau de verrouillage (2) extérieur et dans un deuxième temps de garantir l'engagement des parties (301) et (302) précédemment décrites.

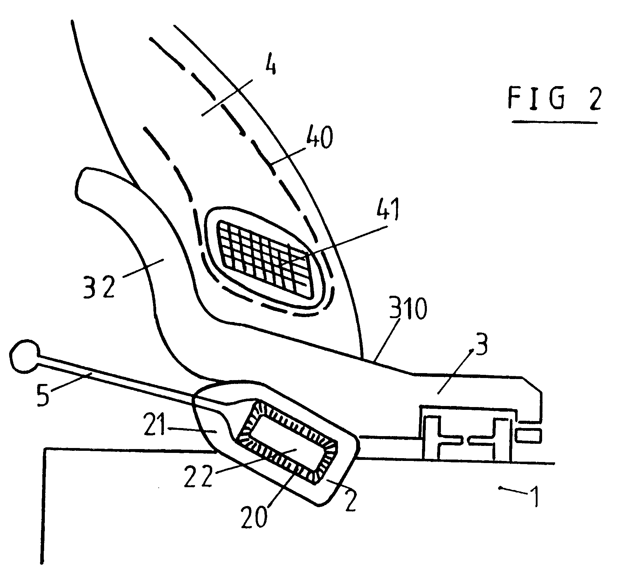

La figure 2 montre un ensemble de montage avec application du même principe que précédemment, les différences principales avec l'exemple précédent de la figure 1 résidant :
1) dans le profil radialement extérieur et axialement intérieur de l'anneau de montage (3), ledit profil étant un profil normalisé pour recevoir les bourrelets de pneumatiques dits "drop-center", profils avec en particulier des sièges d'anneaux tronconiques inclinés à 15° par rapport à la direction de l'axe de rotation,
2) dans la forme de l'évidement (10) du moyeu (1) et en conséquence dans la forme de l'anneau de verrouillage (2) et de l'anneau de renforcement (20).

Si l'on retrouve la forme quasi-triangulaire de l'évidement (10), cette dernière n'est plus isocèle, mais avec un côté axialement extérieur moins incliné par rapport à l'axe de rotation que ne l'est le côté axialement intérieur. Le verrouillage nécessaire et suffisant sera obtenu avec une forme appropriée de l'anneau de renforcement (20),qui est un ressort de section rectangulaire, dont deux côtés adjacents sont parallèles aux deux côtés du quasi-triangle de l'évidement (10).

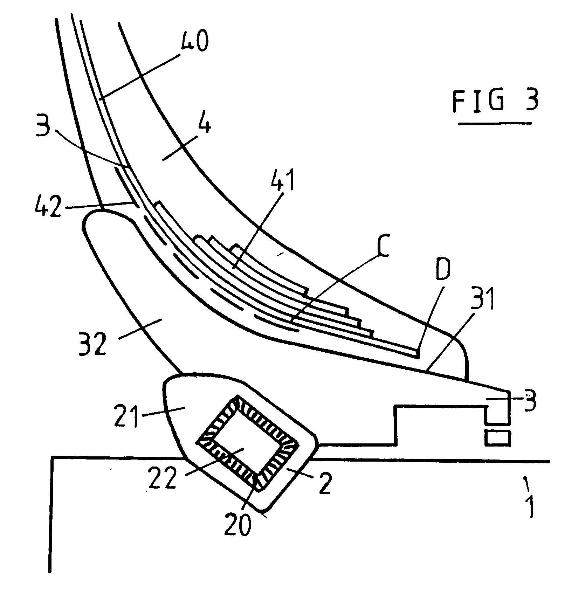

Si les exemples des figures 1 et 2 font appel à des bourrelets de constitution et forme usuelles pour être montés sur des parois d'anneaux de montage qui sont normalisées (TRA, ETRTO), le bourrelet montré sur la figure 3 et le profil radialement intérieur de l'anneau de montage, adapté audit bourrelet, ne sont pas usuels. Le bourrelet du pneumatique montré sur la figure 3 ne comporte pas de tringle, les fonctions d'ancrage d'armature de carcasse et de serrage sur jante étant assurées par la présence de plusieurs renforts (41, 42) de constitutions adaptées, présence combinée à un profil méridien d'armature de carcasse tel que décrit par exemple dans la demande internationale PCT/EP 98/06832, et le profil méridien du siège d'anneau de montage (31) pouvant être lui-même adapté au profil d'armature de carcasse. L'armature de carcasse est, dans chaque bourrelet, au moins radialement à l'extérieur et axialement à l'intérieur renforcée par au moins une première couche additionnelle (41) continue comportant au moins une première partie composée d'au moins une nappe formée d'éléments de renforcement inextensibles faisant avec la direction circonférentielle un angle compris entre - 2,5° et + 2,5. Axialement à l'extérieur et radialement à l'intérieur est avantageusement disposée une deuxième couche additionnelle formée d'au moins une première partie d'au moins une nappe d'éléments de renforcement inextensibles et circonférentiels. Quant au profil méridien d'armature de carcasse (40) dans le bourrelet de pneumatique, il est formé, dans le prolongement dudit profil dans le flanc, par un arc de cercle convexe BC prolongé tangentiellement et axialement à l'intérieur par un segment de droite CD, D étant l'extrémité de l'armature de carcasse (40). Le profil méridien de la paroi, vue en section méridienne, radialement intérieure (31) de l'anneau métallique de montage (3) est semblable au profil de l'armature de carcasse tel défini ci-dessus, puisque formé d'un arc de cercle prolongé par une génératrice tronconique. Quant au reste de l'ensemble de montage et en particulier l'anneau de verrouillage (2), il est pratiquement identique à l'anneau décrit et montré sur la figure 2, hormis les dimensions légèrement modifiées.

S'il n'a été décrit qu'un ensemble roulant composé d'un unique pneumatique, de son ensemble de montage, monté sur un moyeu ne comprenant que deux évidements, on ne sort pas du cadre de l'invention si l'ensemble roulant est composé de deux pneumatiques montés en jumelé : il suffit alors d'avoir un unique moyeu à quatre évidements.

## Revendications

1. Ensemble de montage d'un pneumatique sans chambre à air indépendante, comprenant deux anneaux coniques métalliques de montage (3) destinés à recevoir les bourrelets (4) de pneumatique, lesdits deux anneaux métalliques (3) étant positionnés et verrouillés sur le moyeu (1) du véhicule au moyen de deux anneaux de verrouillage (2) latéraux, circulaires, placés dans un évidement (10) du moyeu (1), **caractérisé en ce que** chaque anneau de verrouillage (2) est composé d'un mélange de caoutchouc (21) vulcanisé, renforcé par et enrobant un anneau de renforcement (20), circonférentiellement élastique et radialement résistant à la compression.

2. Ensemble selon la revendication 1, **caractérisé en ce que** le mélange d'enrobage (21) de l'anneau de renforcement (20) aura un module sécant d'élasticité sous un allongement relatif de 10 % d'au moins 6 MPa.

3. Ensemble selon l'une des revendications 1 ou 2, **caractérisé en ce que** l'anneau de renforcement (20) est un ressort annulaire à spires métalliques jointives, chaque spire ayant une section transversale circulaire de diamètre compris entre 2 et 8 mm, ce qui permet une déformation de la spire sous effort de compression, inférieure à 2 %.

4. Ensemble selon la revendication 3, **caractérisé en ce qu'**un élément continu circulaire (22) en caoutchouc vulcanisé de forte dureté Shore A est inséré à l'intérieur des spires du ressort (20), afin d'améliorer la résistance à la compression dudit ressort.

5. Ensemble selon la revendication 3, **caractérisé en ce qu'**un élément continu circulaire (22) en matière plastique est inséré à l'intérieur des spires du ressort (20), ledit élément (22) étant circulairement discontinu pour conserver l'élasticité du ressort (20).

6. Ensemble selon l'une des revendications 1 à 2, **caractérisé en ce que** l'anneau de renforcement (20) est une succession d'éléments cylindriques en matière rigide, lesdits éléments étant de longueur inférieure au diamètre du cylindre et réunis circonférentiellement entre eux par un mélange de caoutchouc à haute dureté Shore A.

7. Ensemble selon la revendication 3, **caractérisé en ce que** l'anneau de renforcement (20), en vue de faciliter les opérations de démontage du pneumatique et d'enlèvement de l'anneau de verrouillage (2), est muni d'un cordon ou sangle métallique (5) permettant au moyen d'un effort de traction exercée sur ledit cordon (5) de déloger l'anneau (2) de l'évidement (10) du moyeu (1).

8. Ensemble selon la revendication 1, **caractérisé en ce que** chaque évidement (10) du moyeu (1) a une section méridienne dont la surface est quasi-triangulaire avec une base sur la génératrice du moyeu (1) et avec deux côtés formant avec la direction parallèle à l'axe de rotation des angles aigus pouvant être compris entre 10° et 45°, les deux côtés étant réunis à l'opposé de ladite base par un sommet arrondi.

9. Ensemble selon la revendication 8, **caractérisé en ce que** la quasi-hauteur dudit quasi-triangle, abaissée du sommet arrondi sur ladite base est comprise entre 10 et 45 mm.

10. Ensemble selon la revendication 8, **caractérisé en ce que** la section méridienne de l'anneau de renforcement (20) est, dans ses parties radialement intérieure et extérieure, elliptique, au moins 25 % de la dimension radiale maximale de sa section méridienne étant comprise dans la section triangulaire de l'évidement (10) aménagé dans le moyeu (1).

11. Ensemble selon la revendication 8, **caractérisé en ce que** la section méridienne de l'anneau de renforcement (20) est, dans sa partie radialement intérieure, polygonale avec au moins deux côtés sensiblement parallèles aux deux côtés de la section triangulaire de l'évidement (10) du moyeu (1), et au moins 25 % de la dimension radiale maximale de section méridienne de l'anneau (20) étant comprise dans la section triangulaire de l'évidement (10) aménagé dans le moyeu (1).

12. Ensemble selon la revendication 11, **caractérisé en ce que** la section méridienne de l'anneau de renforcement (20) est, dans sa partie radialement extérieure, polygonale avec au moins une partie tronconique dont la génératrice fait avec la direction de l'axe de rotation un angle pouvant être compris entre 15° et 35°.

13. Ensemble selon la revendication 1, **caractérisé en ce que** chaque anneau métallique (3) de montage est composé d'au moins un siège de jante (31) tronconique, ledit siège (31) étant prolongé axialement et radialement à l'extérieur par un rebord de jante (32), ledit rebord (32) pouvant être indépendant du siège (31) et être amovible par rapport audit siège (31).

14. Ensemble selon la revendication 13, **caractérisé en ce que** la paroi radialement extérieure de l'anneau de montage (3), vue en section méridienne, comprend au moins d'une part une génératrice tronconique (310) faisant avec la direction de l'axe de rotation un angle pouvant être compris entre 0° et 16°, et d'autre part, prolongeant axialement à l'extérieur ladite génératrice (310) par l'intermédiaire d'un arc de cercle (330), la courbe (320) représentative du profil axialement intérieur et radialement extérieur du rebord de jante (32), ladite courbe (320) étant située radialement à l'extérieur et axialement à l'intérieur d'un segment de droite joignant le point d'intersection de ladite courbe (320) avec la génératrice tronconique (310) et le point de ladite courbe (320) le plus éloigné de l'axe de rotation.

15. Ensemble selon la revendication 13, **caractérisé en ce que** ledit anneau de montage (3) a une paroi radialement intérieure formée d'au moins une partie tronconique (301) dont la génératrice fait avec la direction de l'axe de rotation un angle compris entre 15° et 35°.

16. Ensemble selon la revendication 13, **caractérisé en ce que** chaque anneau de montage (3) est, dans sa partie axialement intérieure pourvu d'un évidement (303) permettant de loger un système de positionnement et de centrage de l'ensemble de montage (2, 3) sur la moyeu (1).

17. Ensemble selon la revendication 1, **caractérisé en ce que** chaque anneau métallique de montage (3) est rendu solidaire du bourrelet (44) du pneumatique.

## Patentansprüche

1. Baugruppe zur Montage eines Reifens ohne unabhängige Luftkammer, die mindestens zwei konische Montageringe (3) aus Metall aufweist, die dazu bestimmt sind, die Wülste (4) des Reifens aufzunehmen, wobei die genannten, beiden Metallringe (3) auf der Achse (1) des Fahrzeugs mittels zweier seitlicher, kreisförmiger Verriegelungsringe (2) positioniert und verriegelt sind, die in einer Ausnehmung (10) der Achse (1) sitzen, **dadurch gekennzeichnet, daß** jeder Verriegelungsring (2) aus einer vulkanisierten Gummimischung (21) zusammengesetzt ist, die durch einen im Umfangsrichtung elastischen und radial druckbeständigen Verstärkungsring (20) verstärkt ist und diesen umhüllt.

2. Baugruppe nach Anspruch 1, **dadurch gekennzeichnet, daß** die Mischung (21) zur Umhüllung des Verstärkungsringes (20) ein Sekanten-Elastizitätsmodul, unter einer relativen Dehnung von 10%, von mindestens 6 MPa hat.

3. Baugruppe nach einem der Ansprüche 1 oder 2, **dadurch gekennzeichnet, daß** der Verstärkungsring (20) eine ringförmige Feder mit aneinander anliegenden, metallischen Windungen ist, wobei jede Windung einen kreisförmigen Querschnitt mit einem Durchmesser hat, der zwischen 2 und 8 mm liegt, was eine Verformung der Windung unter Druckkraft von weniger als 2% gestattet.

4. Baugruppe nach Anspruch 3, **dadurch gekennzeichnet, daß** ein durchgehendes, kreisförmiges Element (22) aus vulkanisiertem Gummi mit großer Shorehärte A im Inneren der metallischen Windungen der Feder (20) eingefügt ist, um den Druckwiderstand der genannten Feder zu verbessern.

5. Baugruppe nach Anspruch 3, **dadurch gekennzeichnet, daß** ein kreisförmiges, durchgehendes Element (22) aus Kunststoff im Inneren der Windungen der Feder (20) eingefügt ist, wobei das genannte Element (22) über den Kreis diskontinuierlich ist, um die Elastizität der Feder (20) zu bewahren.

6. Baugruppe nach einem der Ansprüche 1 bis 2, **dadurch gekennzeichnet, daß** der Verstärkungsring (20) eine Folge von zylindrischen Elementen aus starrem Material ist, wobei die genannten Elemente eine Länge aufweisen, die kleiner als der Durchmesser des Zylinders ist, und in Umfangsrichtung miteinander durch eine Gummimischung mit hoher Shorehärte A vereinigt sind.

7. Baugruppe nach Anspruch 3, **dadurch gekennzeichnet, daß** der Verstärkungsring (20) zum Erleichtern der Tätigkeiten der Demontage des Reifens und des Entfernens des Verriegelungsringes (2) mit einem Band oder Gurt (5) aus Metall versehen ist, das bzw. der es mittels einer Zugkraft, die auf das genannte Band (5) ausgeübt wird, gestattet, den Ring (2) aus der Ausnehmung (10) der Achse (1) zu entfernen.

8. Baugruppe nach Anspruch 1, **dadurch gekennzeichnet, daß** jede Ausnehmung (10) der Achse (1) einen Meridianschnitt aufweist, dessen Oberfläche gewissermaßen dreieckig ist, mit einer Basis auf der Erzeugenden der Achse (1) und mit zwei Seiten, die zur Richtung parallel zur Drehachse spitze Winkel bilden, die zwischen 10° und 45° liegen können, wobei die beiden Seiten, der genannten Basis gegenüberliegend, durch einen abgerundeten Scheitel verbunden sind.

9. Baugruppe nach Anspruch 8, **dadurch gekennzeichnet, daß** die gewissermaßen vorliegende Höhe des genannten, gewissermaßen vorliegenden Dreiecks über der genannten Basis, um den abgerundeten Scheitel verringert, zwischen 10 und 45 mm liegt.

10. Baugruppe nach Anspruch 8, **dadurch gekennzeichnet, daß** der Meridianschnitt des Verstärkungsringes (20) in seinem radial inneren und äußeren Teil elliptisch ist, wobei mindestens 25% der maximalen, radialen Abmessung des Meridianschnitts im dreieckigen Querschnitt der Ausnehmung (10) liegt, die in die Achse (1) eingebracht ist.

11. Baugruppe nach Anspruch 8, **dadurch gekennzeichnet, daß** der Meridianschnitt des Verstärkungsringes (20) in seinem radial inneren Abschnitt polygonal ist, mit mindestens zwei Seiten, die im wesentlichen parallel zu den beiden Seiten des dreieckigen Querschnitts der Ausnehmung (10) der Achse (1) verlaufen, und mindestens 25% der maximalen, radialen Abmessung des Meridianschnitts des Ringes (20) im dreieckigen Querschnitt der Ausnehmung (10) sitzen, die in die Achse (1) eingebracht ist.

12. Baugruppe nach Anspruch 11, **dadurch gekennzeichnet, daß** der Meridianschnitt des Verstärkungsringes (20) in seinem radial äußeren Teil polygonal ist, mit mindestens einem kegelstumpfförmigen Teil, dessen Erzeugende zur Richtung der Drehachse einen Winkel bildet, der zwischen 15° und 35° liegen kann.

13. Baugruppe nach Anspruch 1, **dadurch gekennzeichnet, daß** jeder Montagering (3) aus Metall aus mindestens einem kegelstumpfförmigen Felgensitz (31) zusammengesetzt ist, wobei der genannte Sitz (31) axial und radial auf der Außenseite durch eine Felgenumrandung (32) verlängert ist, wobei die genannte Umrandung (32) vom Sitz (31) unabhängig sein kann und in Bezug auf den genannten Sitz (31) abnehmbar sein kann.

14. Baugruppe nach Anspruch 13, **dadurch gekennzeichnet, daß** die radio al äußere Wand des Montageringes (3), im Meridianschnitt gesehen, mindestens einerseits eine kegelstumpfförmige Erzeugende (310), die zur Richtung der Drehachse einen Winkel bildet, der zwischen 0° und 16° liegen kann, und andererseits als axiale Verlängerung auf der Außenseite der genannten Erzeugenden (310) mittels eines Kreisbogens (330) die Kurve (320) aufweist, die für das axial innere und radial äußere Profil der Felgenumrundung (32) repräsentativ ist, wobei die genannte Kurve (320) radial auf der Außenseite und axial auf der Innenseite eines Geradensegments liegt, das den Schnittpunkt der genannten Kurve (320) mit der kegelstumpfförmigen Erzeugenden (310) und den Punkt der genannten Kurve (320) verbindet, der von der Drehachse am weitesten entfernt ist.

15. Baugruppe nach Anspruch 13, **dadurch gekennzeichnet, daß** der genannte Montagering (3) eine radial innere Wand aufweist, die aus mindestens einem kegelstumpfförmigen Teil (301) gebildet ist, dessen Erzeugende zur Richtung der Drehachse einen Winkel bildet, der zwischen 15° und 35° liegt.

16. Baugruppe nach Anspruch 13, **dadurch gekennzeichnet, daß** jeder Montagering (3) in seinem axial inneren Teil mit einer Ausnehmung (303) versehen ist, die es gestattet, ein Positionierungs- und Zentriersystem für die Montagebaugruppe (2, 3) auf der Achse (1) aufzunehmen.

17. Baugruppe nach Anspruch 1, **dadurch gekennzeichnet, daß** jeder Montagering (3) aus Metall fest mit dem Wulst (44) des Reifens verbunden ist.

## Claims

1. An assembly for mounting a tyre without independent inner tube, comprising two conical metal mounting rings (3) intended to receive the tyre beads (4), said two metal rings (3) being positioned and locked on the hub (1) of the vehicle by means of two circular lateral locking rings (2), placed in a recess (10) in the hub (1), **characterised in that** each locking ring (2) is composed of a vulcanised rubber mix (21) reinforced by and coating a reinforcement ring (20) which is circumferentially elastic and radially resistant to compression.

2. An assembly according to Claim 1, **characterised in that** the coating mix (21) of the reinforcement ring (20) will have a secant modulus of elasticity at a relative elongation of 10% of at least 6 MPa.

3. An assembly according to one of Claims 1 or 2, **characterised in that** the reinforcement ring (20) is an annular spring with adjacent metal coils, each coil having a circular cross-section of a diameter of between 2 and 8 mm, which permits deformation of the coil under compressive force of less than 2%.

4. An assembly according to Claim 3, **characterised in that** a continuous circular element (22) of vulcanised rubber of high Shore A hardness is inserted into the coils of the spring (20) in order to improve the compressive strength of said spring.

5. An assembly according to Claim 3, **characterised in that** a continuous circular element (22) of plastics material is inserted into the coils of the spring (20), said element (22) being circularly discontinuous in order to maintain the elasticity of the spring (20).

6. An assembly according to one of Claims 1 to 2, **characterised in that** the reinforcement ring (20) is a succession of cylindrical elements of rigid material, said elements being of a length less than the diameter of the cylinder and joined together circumferentially by a rubber mix of high Shore A hardness.

7. An assembly according to Claim 3, **characterised in that** the reinforcement ring (20), in order to facilitate the operations of demounting the tyre and removing the locking ring (2), is provided with a cord or metal strap (5) which makes it possible to dislodge the ring (2) from the recess (10) in the hub (1) by means of a tensile stress exerted on said cord (5).

8. An assembly according to Claim 1, **characterised in that** each recess (10) in the hub (1) has a meridian section, the surface of which is virtually triangular with a base on the generatrix of the hub (1) and with two sides forming acute angles which may be between 10° and 45° with the direction parallel to the axis of rotation, the two sides being joined opposite said base by a rounded apex.

9. An assembly according to Claim 8, **characterised in that** the virtual height of said virtual triangle, lowered by the rounded apex on said base, is between 10 and 45 mm.

10. An assembly according to Claim 8, **characterised in that** the meridian section of the reinforcement ring (20), in its radially inner and outer parts, is elliptical, at least 25% of the maximum radial dimension of its meridian section being located within the triangular section of the recess (10) formed in the hub (1).

11. An assembly according to Claim 8, **characterised in that** the meridian section of the reinforcement ring (20), in its radially inner part, is polygonal with at least two sides substantially parallel to the two sides of the triangular section of the recess (10) of the hub (1), and at least 25% of the maximum radial dimension of the meridian section of the ring (20) being located within the triangular section of the recess (10) formed in the hub (1).

12. An assembly according to Claim 11, **characterised in that** the meridian section of the reinforcement ring (20), in its radially outer part, is polygonal with at least one frustoconical part, the generatrix of which forms an angle which may be between 15° and 35° with the direction of the axis of rotation.

13. An assembly according to Claim 1, **characterised in that** each metal mounting ring (3) is composed of at least one frustoconical rim seat (31), said seat (31) being extended axially and radially to the outside by a rim flange (32), said flange (32) possibly being independent of the seat (31) and being removable relative to said seat (31).

14. An assembly according to Claim 13, **characterised in that** the radially outer wall of the mounting ring (3), viewed in meridian section, comprises at least firstly one frustoconical generatrix (310) forming an angle which may be between 0° and 16° with the direction of the axis of rotation, and, secondly, extending said generatrix (310) axially to the outside by means of an arc of a circle (330), the curve (320) representing the axially inner and radially outer profile of the rim flange (32), said curve (320) being located radially to the outside and axially to the inside of a straight-line segment joining the point of intersection of said curve (320) with the frustoconical generatrix (310) and that point of said curve (320) which is farthest from the axis of rotation.

15. An assembly according to Claim 13, **characterised in that** said mounting ring (3) has a radially inner wall formed of at least one frustoconical part (301), the generatrix of which forms an angle of between 15° and 35° with the direction of the axis of rotation.

16. An assembly according to Claim 13, **characterised in that** each mounting ring (3), in its axially inner part, is provided with a recess (303) which makes it possible to accommodate a positioning and centring system for the mounting assembly (2, 3) on the hub (1).

17. An assembly according to Claim 1, **characterised in that** each metal mounting ring (3) is made integral with the bead (44) of the tyre.
